# EUROPEAN PATENT APPLICATION

(11) **EP 4 769 735 A1**
(43) Date of publication of application: **01.07.2026**
(21) Application number: 25782808.7
(22) Date of filing: 14.03.2025
(51) Int. Cl.: H01M 50/264, H01M 10/04, C09J 7/20

(54) **MANUFACTURING METHOD OF BATTERY MODULE**

(30) Priority: 01.04.2024 KR 20240044194
(71) Applicant: LG ENERGY SOLUTION, LTD., Seoul 07335 (KR)
(72) Inventor: Choi, Jungwoo, Daejeon 34122 (KR)
(74) Representative: Plasseraud IP
(86) International application number: PCT/KR2025/003350
(87) International publication number: WO 2025/211605

(57) **Abstract**

The present invention provides a manufacturing method of a battery module, including: a frame having a lower plate provided with a first hole; a battery cell accommodated in the frame; and a resin applied and cured between the battery cell and the lower plate, the manufacturing method including: a step of attaching a resin tape; a step of injecting uncured resin; and a step of removing the resin tape, wherein the resin tape includes a reinforcement portion having a toughness along the first direction stronger than other portions of the resin tape.

## Description

### [TECHNICAL FIELD]

This application claims the benefit of priority based on Korean Patent Application No. 10-2024-0044194 filed on April 1, 2024, entire content disclosed in the document of the patent applications is included as a part of this specification.

The present invention relates to a resin tape structure and a manufacturing method of a battery module capable of preventing breakage of the resin tape for removing excess resin after injection of uncured resin.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

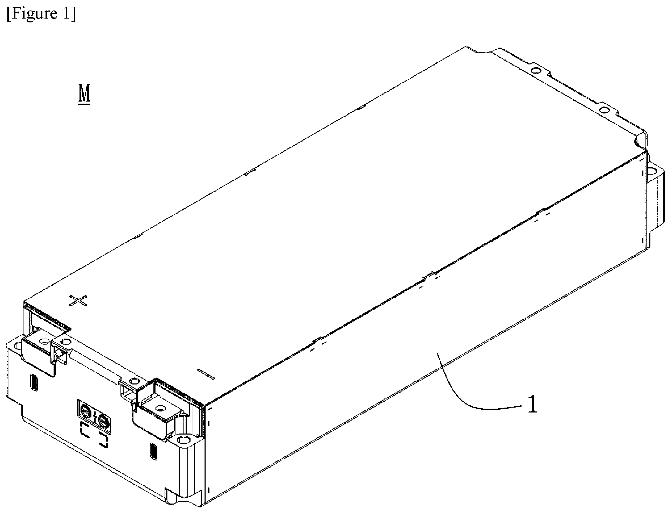

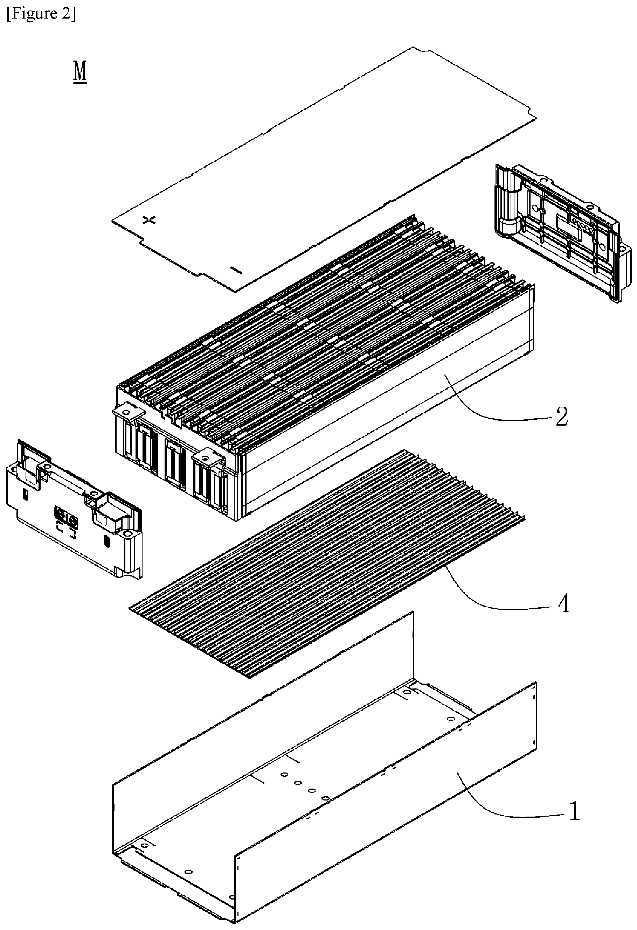

FIGS. 1 and 2 illustrate a structure of a battery module. Referring to FIGS. 1 and 2, a battery module M is manufactured by placing stacked battery cells 2 in a frame 1 of a metal material. The frame 1 may form a box-shaped housing together with other plates covering the upper end and the front and rear ends of the battery cell 2 as shown in FIG. 2.

A resin 4 is provided between the lower plate of the frame 1 and the lower surface of the battery cell 2. The resin 4 is applied on the lower plate, and the battery cell 2 is placed thereafter, the resin 4 is cured to adhesively fix the battery cell 2 to the frame 1. The resin 4 is made of a material with high thermal conductivity and may conduct heat generated in the battery cell 2 during charge and discharge to the frame 1 to dissipate heat.

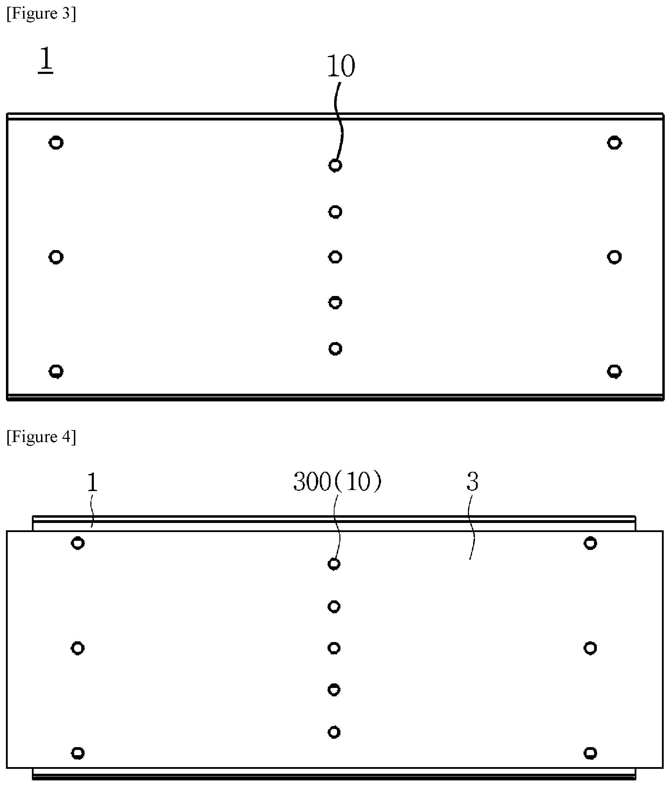

FIG. 3 illustrates a lower surface of a frame of the battery module of FIG. 1. Referring to FIG. 3, a plurality of first holes 10 may be provided in the frame 1 for injecting the resin 4. Some of the plurality of first holes 10 may be provided for the purpose of checking whether the space between the battery cell 2 and the frame 1 is completely filled with the resin 4.

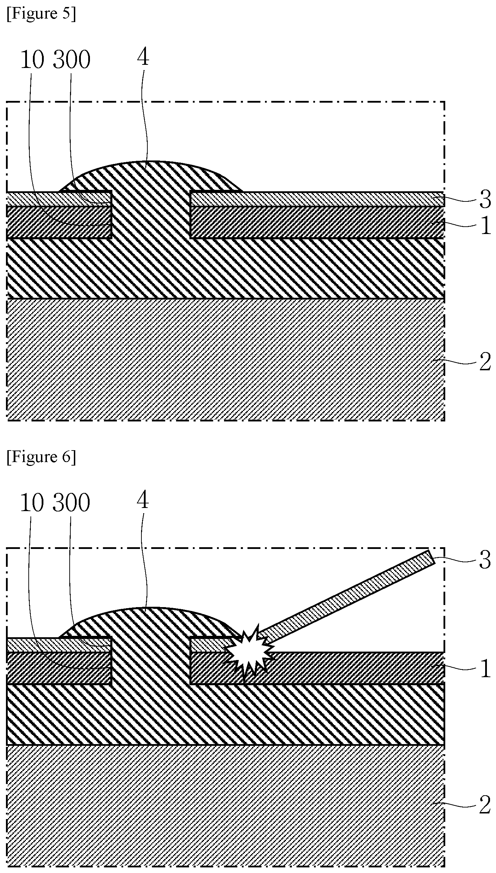

FIG. 4 illustrates the frame of FIG. 3 with a resin tape attached thereto, and FIG. 5 illustrates a cross-section of a battery module after resin is injected. Referring to FIGS. 4 and 5, after the resin 4 is injected through the first hole 10, the resin tape 3 may be used to remove the excess resin that has overflowed. The resin tape 3 has a second hole 300 corresponding to the first hole 10 so as to receive the excess resin overflowing through the first hole 10, and the excess resin may also be removed as the resin tape 3 is removed.

FIG. 6 illustrates the resin tape of FIG. 5 being torn during removal thereof. Referring to FIG. 6, the resin tape 3 may be torn during the removal process. This is especially true when the resin 4 is cured and a sharp edge is formed. In such case, it is very troublesome to remove the excess resin and the piece of the resin tape 3 caught between the excess resin and the frame 1.

### [DISCLOSURE]

### [TECHNICAL PROBLEM]

In order to solve above-described problems of prior art, it is an object of the present invention to provide a structure of a resin tape that is not easily torn. Specifically, it is an object of the present invention to provide an economical resin tape structure that is not torn by the sharp edge of the excess cured resin.

It is another object of the present invention to provide a manufacturing method of battery module in which resin injection and excess resin removal may be smoothly performed.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a manufacturing method of a battery module, comprising: a frame having a lower plate provided with a first hole; a battery cell accommodated in the frame; and a resin applied and cured between the battery cell and the lower plate, the manufacturing method comprising, in order,: a tape attaching step of attaching a resin tape having a second hole provided at a position corresponding to that of the first hole on a surface of the lower plate of the frame accommodating the battery cell; a resin injecting step of injecting uncured resin through the first hole and the second hole with the surface of the lower plate facing upward; and a tape removing step of removing the resin tape from the lower plate, wherein the resin tape comprises a first reinforcement portion extending along a first direction and having a toughness along the first direction stronger than other portions of the resin tape.

A plurality of first holes and a plurality of second holes arranged in the first direction may be provided. Here, since the extending direction of the first reinforcement portion and the arrangement direction of the first hole and the second hole are parallel, the first reinforcement portion may be spaced apart from the first hole and the second hole by a predetermined distance or less.

In the tape removing step, the resin tape may be detached starting from first end thereof in the first direction and ending at the second end thereof in the first direction. That is, the resin tape may be detached along the first direction. Here, since the resin tape includes the first reinforcement portion having high toughness along the first direction, the resin tape is not easily torn during the detachment process.

A plurality of first reinforcement portion arranged in the second direction may be provided.

According to an embodiment of the present invention, a pair of first reinforcement portions juxtaposed on two sides of the second hole in the second direction, respectively, may be provided.

In such a case, in the resin injecting step, the resin may be injected until the resin overflows from the second hole to cover at least a part of the pair of first reinforcement portions.

Accordingly, the first reinforcement portion may exert a force to lift the overflowed resin during the removal of the resin tape. As a result, the excess resin may be easily removed, and the tearing of the resin tape may be prevented.

According to a first modified example of the present invention, the first reinforcement portion may be provided at first side of the second hole in the second direction. In such a case, it is more economical compared to the first reinforcement portion being provided as a pair.

In such case, the resin injecting step may be performed with the surface of the lower plate inclined in the second direction. Here, the resin may be injected until the resin overflows from the second hole to cover at least a part of the first reinforcement portion.

Accordingly, the first reinforcement portion may exert a force to lift the overflowed resin during the removal of the resin tape. As a result, the excess resin may be easily removed, and the tearing of the resin tape may be prevented.

According to a second modified example of the present invention, the resin tape may further include a second reinforcement portion extending along the second direction, the second reinforcement portion having a toughness along the second direction stronger than that of other portions of the resin tape.

The resin tape may include a first tape having an adhesive surface and a non-adhesive surface, and a second tape attached to the non-adhesive surface of the first tape and having toughness stronger than that of the first tape to form the first reinforcement portion and the second reinforcement portion.

In the tape removing step, the resin tape may be detached starting from first end thereof in the second direction and ending at the second end thereof in the second direction. That is, the resin tape may be detached along the second direction. Here, since the resin tape includes the second reinforcement portion having high toughness along the second direction, the resin tape is not easily torn during the detachment process.

A plurality of second reinforcement portions arranged in the first direction may be provided.

For example, a pair of first reinforcement portions juxtaposed on two sides of the second hole in the first direction, respectively, may be provided.

In such a case, in the resin injecting step, the resin may be injected until the resin overflows from the second hole to cover at least a part of the pair of first reinforcement portions.

Accordingly, the second reinforcement portion may exert a force to lift the overflowed resin during the removal of the resin tape. As a result, the excess resin may be easily removed, and the tearing of the resin tape may be prevented.

Alternatively, the second reinforcement portion may be provided at first side of the second hole in the first direction. In such a case, it is more economical compared to the second reinforcement portion being provided as a pair.

In such case, the resin injecting step may be performed with the surface of the lower plate inclined along the first direction, and the resin may be injected until the resin overflows from the second hole to cover at least a portion of the second reinforcement portion.

Accordingly, the second reinforcement portion may exert a force to lift the overflowed resin during the removal of the resin tape. As a result, the excess resin may be easily removed, and the tearing of the resin tape may be prevented.

### [ADVANTAGEOUS EFFECTS]

The present invention may provide an economical resin tape structure that is not easily torn by adding a reinforcement portion having strong toughness.

The present invention may also provide a manufacturing method of a battery module capable of effectively removing excess resin.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a battery module.
FIG. 3 illustrates a lower surface of a frame of the battery module of FIG. 1.
FIG. 4 illustrates the frame of FIG. 3 with a resin tape attached thereto.
FIG. 5 illustrates a cross-section of a battery module after resin is injected.
FIG. 6 illustrates the resin tape of FIG. 5 being torn during removal thereof.
FIGS. 7 and 8 illustrate a battery module according to an embodiment of the present invention.
FIG. 9 illustrates a lower surface of a frame according to an embodiment of the present invention.
FIG. 10 illustrates a manufacturing method of a battery module according to an embodiment of the present invention.
FIG. 11 illustrates a frame with a resin tape attached thereto according to an embodiment of the present invention.
FIG. 12 illustrates the main part of the frame with the resin tape of FIG. 11.
FIG. 13 illustrates the frame with the resin tape of FIG. 11after resin is injected.
FIG. 14 illustrates the main part of the frame of FIG. 13.
FIG. 15 illustrates the resin tape being removed according to an embodiment of the present invention.
FIG. 16 illustrates a battery module and a resin tape according to a first modified example of the present invention.
FIG. 17 illustrates the battery module of FIG. 16 after resin is injected.
FIG. 18 illustrates a battery module and a resin tape according to a second modified example of the present invention.

### [DESCRIPTION OF REFERENCE NUMERALS]

1: frame
   10: first hole
2: battery cell
3: resin tape
   30: first tape
   300: second hole
   31: first reinforcement portion (second tape)
   32: second reinforcement portion (second tape)
4: resin
M: battery module

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

For convenience, throughout the specification, the first direction may be interpreted as the widthwise direction or the direction of the short side, and the second direction may be interpreted as the lengthwise direction or the direction of the long side. However, this is only for the convenience of description and understanding, and in a strict sense, the first direction and the second direction should be interpreted as one horizontal direction and another horizontal direction intersecting therewith.

Hereinafter, preferred embodiments of the present invention will be described with reference to the accompanying drawings.

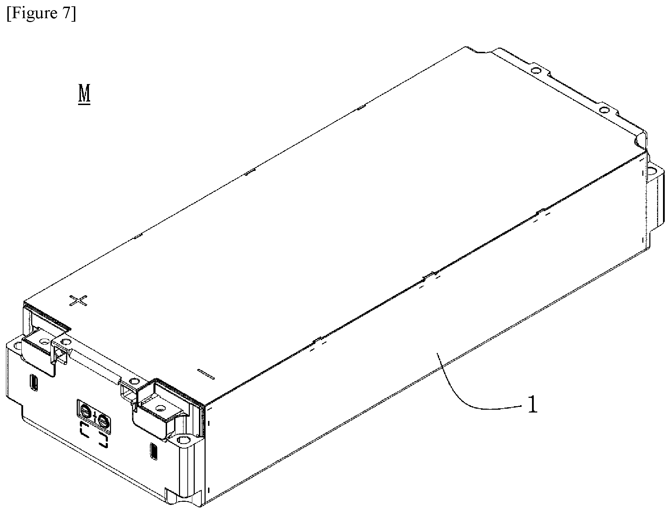

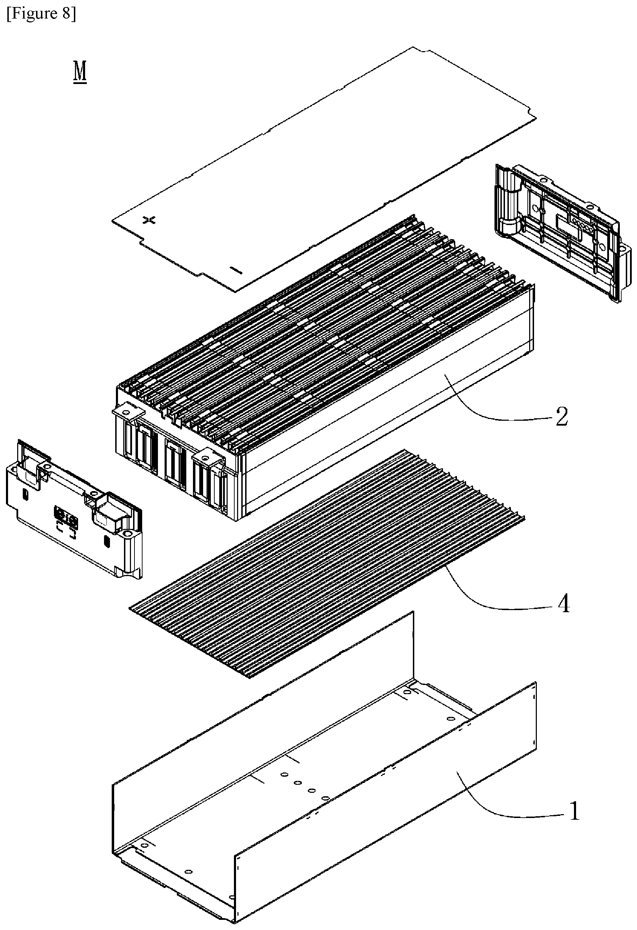

FIGS. 7 and 8 illustrate a battery module according to an embodiment of the present invention. Referring to FIGS. 7 and 8, a battery module M according to an embodiment of the present invention may include a battery cell 2, a frame 1 that accommodates the battery cell 2, and a resin 4 provided between the frame 1 and the battery cell 2.

The battery cell 2 may be a pouch-type battery cell in which multiple cells are stacked, but is not limited thereto, and the battery cell 2 may be any type of battery cell as long as the battery cell has a predetermined lower surface that may be attached to the resin 4.

The frame 1 has open upper end, open front end, and/or open rear end, and may form a housing together with other plate members in which the battery cell 2 is accommodated. However, the shape of the frame 1 is not specifically limited.

The frame 1 may include a metal material.

The resin 4 may be cured after being injected between the frame 1 and the battery cell 2, thereby adhesively fixing the battery cell 2 to the frame 1. Here, the resin 4 may include a material having high thermal conductivity such that heat generated from the battery cell 2 is conducted to the frame 1 to dissipate heat. That is, the resin 4 may mechanically and thermally connect the battery cell 2 to the frame 1.

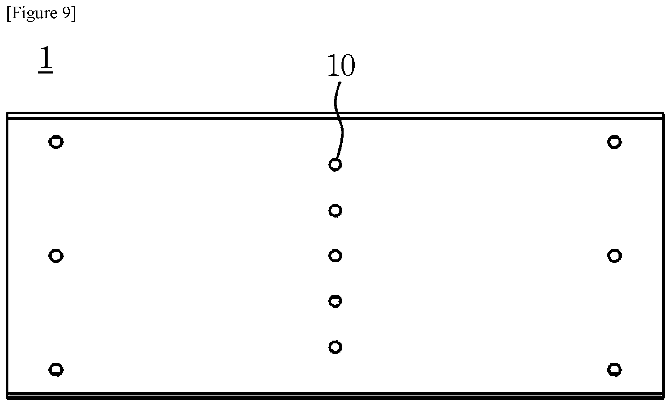

FIG. 9 illustrates a lower surface of a frame according to an embodiment of the present invention. Referring to FIG. 9, the frame 1 may include a first hole 10 through which the resin 4 may be injected. According to an embodiment of the present invention, a battery module M may be manufactured by filling and curing the resin 4 between the frame 1 and the battery cell 2 through the first hole 10 with the lower surface of the frame 1 facing upward after the battery cell 2 is accommodated in the frame 1.

Hereinafter, a manufacturing method of a battery module M according to an embodiment of the present invention will be described in detail.

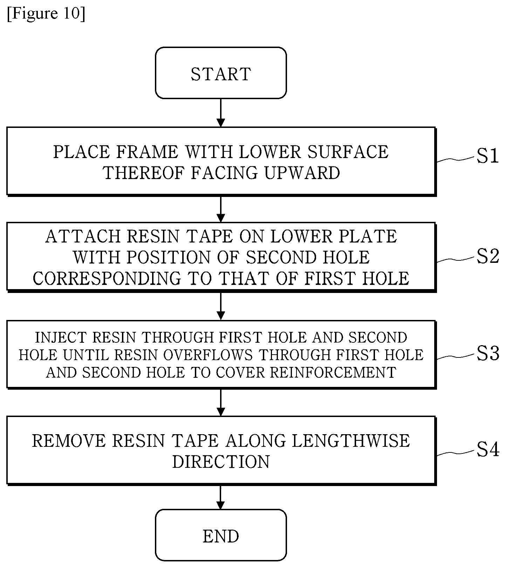

FIG. 10 illustrates a manufacturing method of a battery module according to an embodiment of the present invention. Referring to FIG. 10, the manufacturing method of a battery module according to an embodiment of the present invention includes, in order,: a step S1 of placing the frame 1 accommodating the battery cell 2 with the lower surface thereof facing upward; a tape attaching step S2 of attaching a resin tape 3 having a second hole provided at a position corresponding to that of the first hole 10 on the surface of the lower plate of the frame 1; a resin injecting step S3 of injecting an uncured resin 4 through the first hole 10 and the second hole; and a tape removing step S4 of removing the resin tape 3 from the lower plate.

According to an embodiment of the present invention, the resin tape 3 is removed after the injection of the resin 4 is completed, thereby removing the excess resin that injected through and overflowed from the first hole 10 and the second hole.

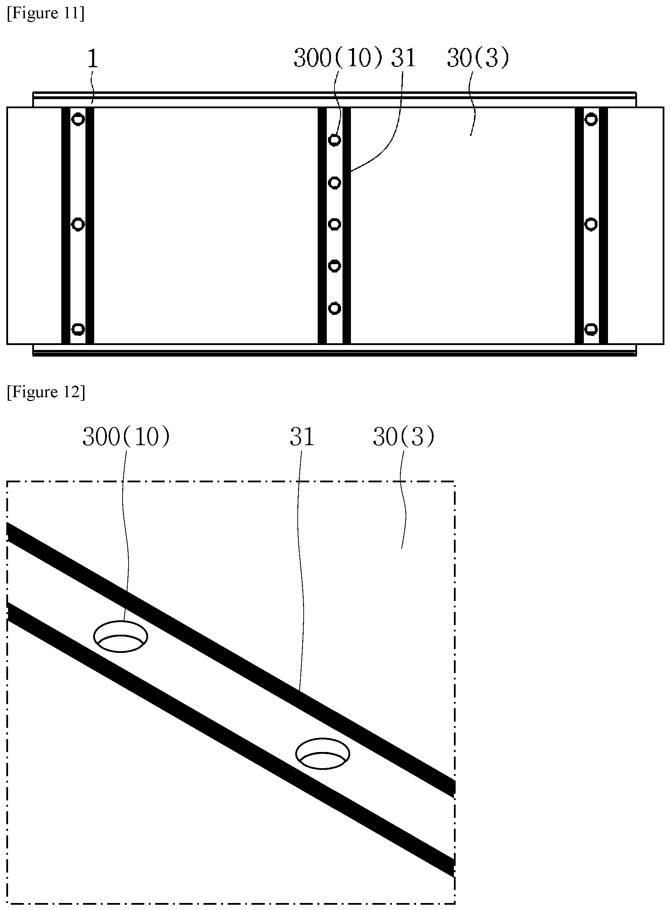

FIG. 11 illustrates a frame with a resin tape attached thereto according to an embodiment of the present invention, and FIG. 12 illustrates the main part of the frame with the resin tape of FIG. 11. Referring to FIGS. 11 and 12, the resin tape 3 may have a second hole 300 corresponding to the first hole 10.

The resin tape 3 may include a first reinforcement portion 31 extending along the first direction and having a toughness along the first direction stronger than other portions of the resin tape. For example, the resin tape 3 may include a first tape 30 having an adhesive surface and a non-adhesive surface, and a second tape 31 attached to the non-adhesive surface of the first tape 30 and having stronger toughness than the first tape 30 to form the first reinforcement portion 31.

A plurality of first holes 10 and a plurality of second holes 300 arranged in the first direction may be provided. Here, since the extending direction of the first reinforcement portion 31 and the arrangement direction of the first hole 10 and the second hole 300 are parallel, the first reinforcement portion 31 may be spaced apart from the first hole 10 and the second hole 300 by a predetermined distance or less.

A plurality of first reinforcement portions 31 arranged in the second direction may be provided.

According to an embodiment of the present invention, a pair of first reinforcement portions 31 arranged on two sides of the second hole 300 in the second direction, respectively, may be provided.

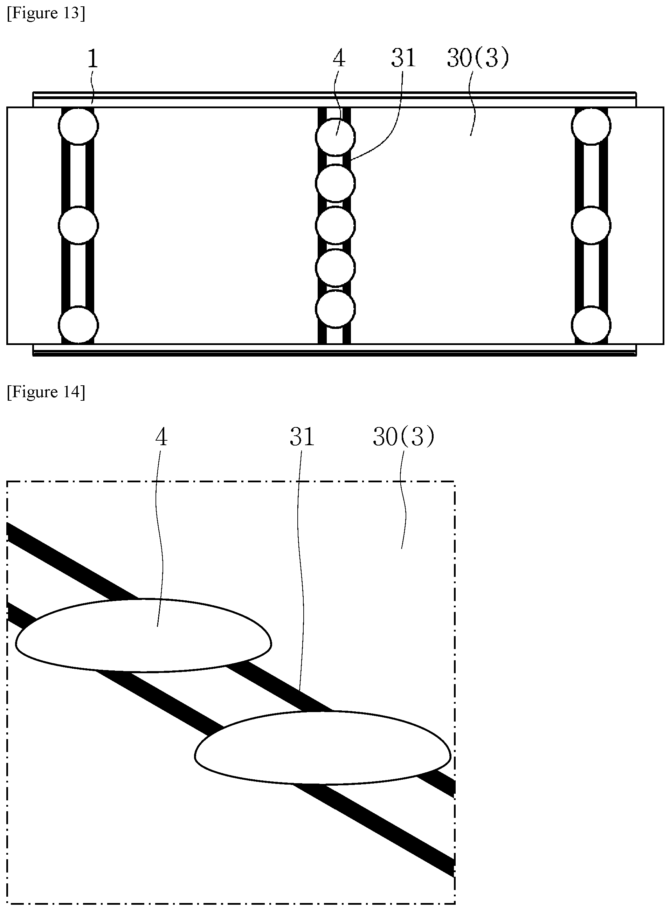

FIG. 13 illustrates the frame with the resin tape of FIG. 11after resin is injected, and FIG. 14 illustrates the main part of the frame of FIG. 13. Referring to FIGS. 13 and 14, in the resin injecting step S3 according to an embodiment of the present invention, the resin 4 may be injected until the resin 4 overflows from the second hole 300 to cover at least a portion of the pair of first reinforcement portions 31.

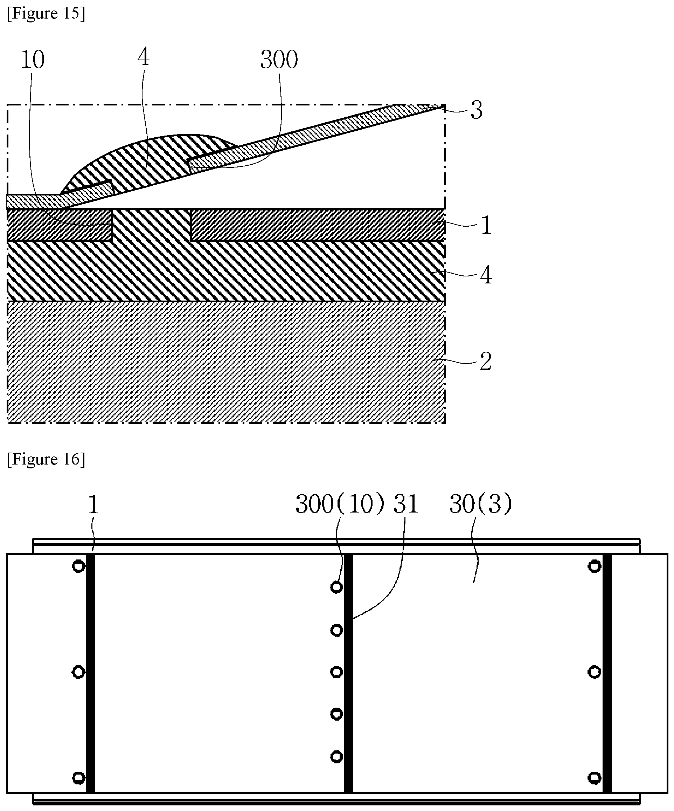

FIG. 15 illustrates the resin tape being removed according to an embodiment of the present invention. Referring to FIG. 15, in the tape removing step S4, the resin tape 3 may be detached starting from first end thereof in the first direction and ending at the second end thereof in the first direction. That is, the resin tape 3 may be detached along the first direction. Here, since the resin tape 3 includes the first reinforcement portion 31 having high toughness along the first direction, the resin tape 3 is not easily torn during the detachment process.

According to an embodiment of the present invention, as the resin 4 overflows to cover at least a portion of the first reinforcement portion 31, the first reinforcement portion 31 may exert a force to lift the overflowed resin during the removal of the resin tape 3. Accordingly, the excess resin may be easily removed, and the tearing of the resin tape 3 may be prevented.

FIG. 16 illustrates a battery module and a resin tape according to a first modified example of the present invention. Referring to FIG. 16, in a modified example, the first reinforcement portion 31 may be provided at first side of the second hole 300 in the second direction. In such a case, it is more economical compared to the first reinforcement portion 31 being provided as a pair.

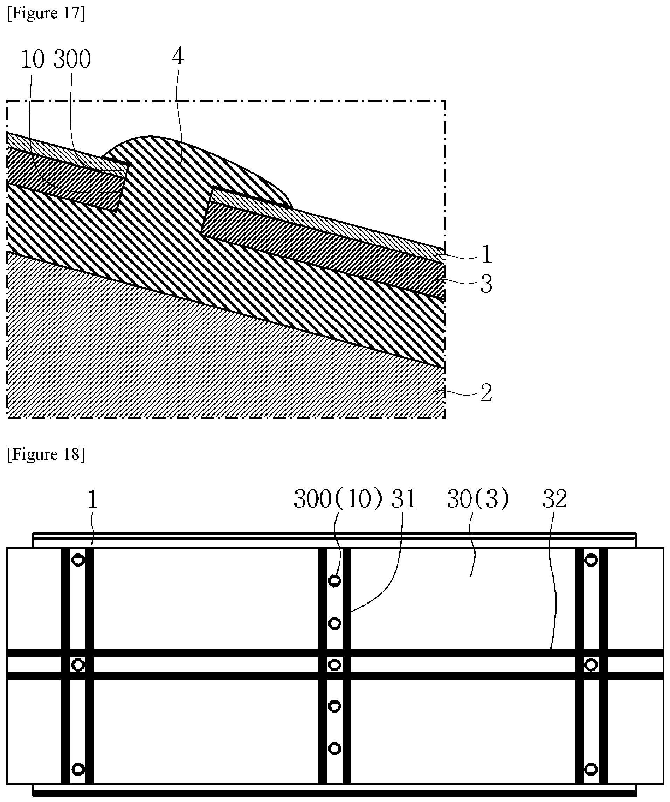

FIG. 17 illustrates the battery module of FIG. 16 after resin is injected. Referring to FIG. 17, the resin injecting step S3 according to a first modified example may be performed with the surface of the lower plate inclined in the second direction. Here, the resin 4 may be injected until the resin 4 overflows from the second hole 300 to cover at least a part of the first reinforcement portion 31.

Accordingly, the first reinforcement portion 31 may exert a force to lift the overflowed resin during the removal of the resin tape 3. As a result, the excess resin may be easily removed, and the tearing of the resin tape 3 may be prevented.

FIG. 18 illustrates a battery module and a resin tape according to a second modified example of the present invention. Referring to FIG. 18, the resin tape 3 according to the second modified example may further include a second reinforcement portion 32 extending along the second direction and having a toughness along the second direction stronger than that of other portions of the resin tape 3.

The resin tape 3 may include a first tape 30 having an adhesive surface and a non-adhesive surface, and a second tape 32 attached to the non-adhesive surface of the first tape 30 and having toughness stronger than that of the first tape 30 to form the first reinforcement portion 31 and the second reinforcement portion 32.

In the tape removing step S4, the resin tape 3 may be detached starting from first end thereof in the second direction and ending at the second end thereof in the second direction. That is, the resin tape 3 may be detached along the second direction. Here, since the resin tape 3 includes the second reinforcement portion 32 having high toughness along the second direction, the resin tape 3 is not easily torn during the detachment process.

A plurality of second reinforcement portions 32 arranged in the first direction may be provided.

For example, a pair of second reinforcement portions 32 juxtaposed on two sides of the second hole 300 in the first direction, respectively, may be provided.

In such a case, in the resin injecting step S3, the resin 4 may be injected until the resin 4 overflows from the second hole 300 to cover at least a part of the pair of second reinforcement portions 32.

Accordingly, the second reinforcement portion 32 may exert a force to lift the overflowed resin during the removal of the resin tape 3. As a result, the excess resin may be easily removed, and the tearing of the resin tape 3 may be prevented.

Alternatively, the second reinforcement portion 32 may be provided at first side of the second hole 300 in the first direction. In such a case, it is more economical compared to the second reinforcement portion 32 being provided as a pair.

In such a case, the resin injecting step S3 may be performed with the surface of the lower plate inclined in the first direction. Here, the resin 4 may be injected until the resin 4 overflows from the second hole 300 to cover at least a part of the second reinforcement portion 32.

Accordingly, the second reinforcement portion 32 may exert a force to lift the overflowed resin during the removal of the resin tape 3. As a result, the excess resin may be easily removed, and the tearing of the resin tape 3 may be prevented.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A manufacturing method of a battery module, comprising: a frame having a lower plate provided with a first hole; a battery cell accommodated in the frame; and a resin applied and cured between the battery cell and the lower plate, the manufacturing method comprising, in order,:
a tape attaching step of attaching a resin tape having a second hole provided at a position corresponding to that of the first hole on a surface of the lower plate of the frame accommodating the battery cell;
a resin injecting step of injecting uncured resin through the first hole and the second hole with the surface of the lower plate facing upward; and
a tape removing step of removing the resin tape from the lower plate,
wherein the resin tape comprises a first reinforcement portion extending along a first direction and having a toughness along the first direction stronger than other portions of the resin tape.

2. The manufacturing method of claim 1, wherein a plurality of first holes and a plurality of second holes arranged along the first direction are provided.

3. The manufacturing method of claim 1, wherein the resin tape comprises a first tape having an adhesive surface and a non-adhesive surface, and a second tape attached to the non-adhesive surface of the first tape and having toughness stronger than that of the first tape to form the first reinforcement portion.

4. The manufacturing method of claim 1, wherein, in the tape removing step, the resin tape is detached starting from first end thereof in the first direction and ending at the second end thereof in the first direction.

5. The manufacturing method of claim 1, wherein a plurality of first reinforcement portion arranged in the second direction are provided.

6. The manufacturing method of claim 5, wherein a pair of first reinforcement portions juxtaposed on two sides of the second hole in the second direction, respectively, are provided.

7. The manufacturing method of claim 6, wherein, in the resin injecting step, the resin is injected until the resin overflows from the second hole to cover at least a portion of the pair of first reinforcement portions.

8. The manufacturing method of claim 1, wherein the first reinforcement portion is provided on a first side of the second hole in the second direction.

9. The manufacturing method of claim 8, wherein the resin injecting step is performed with the surface of the lower plate inclined along the second direction, and
the resin is injected until the resin overflows from the second hole to cover at least a portion of the first reinforcement portion.

10. The manufacturing method of claim 1, wherein the resin tape further comprises a second reinforcement portion extending along the second direction, the second reinforcement portion having a toughness along the second direction stronger than that of other portions of the resin tape.

11. The manufacturing method of claim 10, wherein the resin tape comprises a first tape having an adhesive surface and a non-adhesive surface, and a second tape attached to the non-adhesive surface of the first tape and having toughness stronger than that of the first tape to form the first reinforcement portion and the second reinforcement portion.

12. The manufacturing method of claim 10, wherein, in the tape removing step, the resin tape is detached starting from first end thereof in the second direction and ending at the second end thereof in the second direction.

13. The manufacturing method of claim 10, wherein a plurality of second reinforcement portions arranged in the first direction are provided.

14. The manufacturing method of claim 13, wherein a pair of first reinforcement portions juxtaposed on two sides of the second hole in the first direction, respectively, are provided.

15. The manufacturing method of claim 14, wherein, in the resin injecting step, the resin is injected until the resin overflows from the second hole to cover at least a portion of the pair of second reinforcement portions.

16. The manufacturing method of claim 10, wherein the second reinforcement portion is provided on a first side of the second hole in the first direction.

17. The manufacturing method of claim 16, wherein the resin injecting step is performed with the surface of the lower plate inclined along the first direction, and
the resin is injected until the resin overflows from the second hole to cover at least a portion of the second reinforcement portion.
